# EUROPÄISCHE PATENTANMELDUNG

(11) **EP 3 498 533 A1**
(43) Veröffentlichungstag der Anmeldung: **19.06.2019**
(21) Anmeldenummer: 18164903.9
(22) Anmeldetag: 29.03.2018
(51) Int. Cl.: B60P 3/06, B62D 47/00

(54) **TRÄGERFAHRZEUG UND TRANSPORTFAHRZEUG**

(30) Priorität: 15.12.2017 EP 17207670
(71) Anmelder: MAGNA STEYR Fahrzeugtechnik AG & Co KG, 8041 Graz (AT)
(72) Erfinder: ERLACHER, Manuel, 9545 Radenthein (AT); HÖRMANN, Reinhard, 8151 Hitzendorf (AT); PLANKA, Franz, 9433 St. Andrä (AT); ZACHNEGGER, Harald, 8041 Graz (AT)
(74) Vertreter: Zangger, Bernd

(57) **Zusammenfassung**

Ein Trägerfahrzeug (1), umfassend mindestens einen Aufnahmemechanismus zur Aufnahme mindestens eines an sich selbstständig fahrfähigen Transportfahrzeuges (2), so dass ein mittels Aufnahmemechanismus aufgenommenes Transportfahrzeug (2) ohne selbstständige Fahrleistung mit dem Trägerfahrzeug (1) mitfahren kann, wobei der Aufnahmemechanismus eine Hebevorrichtung (3, 5, 11) an einer Seitenwand am Trägerfahrzeug (1) umfasst und der Aufnahmemechanismus dazu ausgebildet ist, das Transportfahrzeug (2) an einer Seitenwand des Transportfahrzeuges (2) mittels Hebevorrichtung (3, 5, 11) anzuheben oder sich anheben zu lassen und das Transportfahrzeug (2) außen am Trägerfahrzeug (1) zum Mitfahren aufzunehmen und ein entsprechendes Transportfahrzeug (2).

## Beschreibung

### Gebiet der Erfindung

Die vorliegende Erfindung betrifft ein Trägerfahrzeug zur Aufnahme mindestens eines Transportfahrzeuges und ein solches Transportfahrzeug, dass in einem Trägerfahrzeug aufgenommen werden kann.

### Stand der Technik

Trägerfahrzeuge, die dazu ausgebildet sind ein Transportfahrzeug aufzunehmen, als ein weiteres, üblicherweise kleineres Fahrzeug, das an sich auch selbstständig als Fahrzeug gefahren und genutzt werden kann, derart aufzunehmen, dass es durch das Trägerfahrzeug bewegt und daher mit diesem mitbewegt wird, sind an sich bekannt.

Beispielsweise kann der Transport von neuen Automobilen zu Automobilhändlern über dazu ausgebildete Lastkraftwagen auf geeigneten Ladeflächen erfolgen. Die Automobile und somit die Transportfahrzeuge müssen dazu mittels einer Rampe auf das Trägerfahrzeug verladen werden.

Bekannt sind auch elektrisch angetriebene Fahrzeuge, deren Reichweite durch die Kapazität einer mitgeführten Antriebsbatterie oft unerwünscht stark beschränkt ist.

Insbesondere verbrauchen die Systeme von autonomen, elektrischen Fahrzeugen, also solchen die ohne menschlichen Fahrer von einem Steuergerät autonom gesteuert werden können, eine große Menge an Energie.

Aus der DE 10 2014 100 355 A1 und der DE 10 2010 010 119 A1 sind Trägerfahrzeuge bekannt, die kleinere Fahrzeuge aufnehmen können, um deren Reichweite zu erhöhen.

### Zusammenfassung der Erfindung

Es ist eine Aufgabe der Erfindung, ein Trägerfahrzeug anzugeben, das ein Transportfahrzeug aufnehmen kann, insbesondere um dessen Reichweite zu erhöhen, wobei das Beladen und/oder Entladen des Transportfahrzeugs auf das Trägerfahrzeug möglichst effizient erfolgen soll.

Eine weitere Aufgabe der Erfindung ist es ein Transportfahrzeug anzugeben, dass effizient auf ein solches Trägerfahrzeug aufgenommen werden kann, insbesondere um die Reichweite des Transportfahrzeuges zu erhöhen, und einen Fahrzeugverbund umfassend sowohl ein solches Trägerfahrzeug als auch ein dazu passendes Transportfahrzeug anzugeben.

Die Lösung der Aufgabe erfolgt durch ein Trägerfahrzeug, umfassend mindestens einen Aufnahmemechanismus zur Aufnahme mindestens eines an sich selbstständig fahrfähigen Transportfahrzeuges, so dass ein mittels Aufnahmemechanismus aufgenommenes Transportfahrzeug ohne selbstständige Fahrleistung mit dem Trägerfahrzeug mitfahren kann, wobei der Aufnahmemechanismus eine Hebevorrichtung an einer Seitenwand am Trägerfahrzeug umfasst und der Aufnahmemechanismus dazu ausgebildet ist, das Transportfahrzeug an einer Seitenwand des Transportfahrzeuges mittels Hebevorrichtung anzuheben oder sich anheben zu lassen und das Transportfahrzeug außen am Trägerfahrzeug zum Mitfahren aufzunehmen.

Die aufgenommenen Fahrzeuge können daher platzsparend außen am Trägerfahrzeug aufgenommen und mitgeführt werden. Insbesondere ermöglicht eine derartige seitliche Aufnahme kleinerer Fahrzeuge, an den jeweiligen Seitenwänden, auch ein rascheres "Beladen" und/oder "Entladen" der Transportfahrzeuge, optional sogar ohne Stillstand der beteiligten Fahrzeuge und daher ohne Stillstandszeiten.

Insbesondere können auf diese Weise kleinere autonome Fahrzeuge von autonomen Trägerfahrzeugen aufgenommen werden, so dass die Transportfahrzeuge gegebenenfalls elektrische Energie einsparen können und gegebenenfalls auch die autonomen Funktionen der Transportfahrzeuge durch die Trägerfahrzeuge übernommen werden können.

Die Steuereinheiten der autonomen Fahrzeuge können dazu ausgebildet sein, beispielsweise durch Vernetzung und Zusammenarbeit der Steuereinheiten, eine für das Laden eines Transportfahrzeuges geeignete Annäherung der beiden Fahrzeugpositionen und/oder der Fahrzeuggeschwindigkeiten aneinander zu ermöglichen.

Durch das Anheben der aufzunehmenden Fahrzeuge wird bevorzugt auch ein vordefinierter Böschungswinkel des Trägerfahrzeuges erreicht bzw. eingehalten.

Erfindungsgemäß erfolgt das Laden eines Transportfahrzeuges auf ein Trägerfahrzeug nicht mittels einer Rampe, sondern mittels eines seitlichen Aufnahmemechanismus der es erlauben kann, während der Fahrt und somit ohne Stillstandszeiten des Trägerfahrzeuges, ein Transportfahrzeug aufzunehmen. Hierzu wird das, üblicherweise kleinere, Transportfahrzeug vom Trägerfahrzeug, insbesondere während der Fahrt des Trägerfahrzeuges, im Bereich der Seitenwand des Transportfahrzeuges angehoben und im Bereich der Seitenwand des Trägerfahrzeugs festgehalten, so dass das Transportfahrzeug seitlich am Trägerfahrzeug aufgenommen ist und mit diesem bewegt wird, also mitfährt. Bevorzugt erfolgt das Anheben des Transportfahrzeuges dabei so, dass das Transportfahrzeug nur vertikal bewegt wird und nicht horizontal bewegt wird. Vorzugsweise liegt eine vertikale Seitenwand des Transportfahrzeuges benachbart einer vertikalen Seitenwand des Trägerfahrzeuges und die Seitenwand des Transportfahrzeuges wird parallel zur Seitenwand des Trägerfahrzeuges angehoben.

Die Hebevorrichtung am Trägerfahrzeug kann auch passiv ausgeführt sein, so dass sich das Transportfahrzeug selbst an der Hebevorrichtung des Trägerfahrzeuges anhebt.

Eine "Seitenwand" und "seitlich" bezeichnet im Rahmen dieser Schrift jede Begrenzungsfläche des Fahrzeuges an den üblicherweise vier Seiten des Fahrzeuges, also dessen Begrenzungsflächen mit Ausnahme der horizontalen Boden- und Deckenflächen.

Bevorzugt kommen hierdurch im aufgenommenen Zustand Seitenwände von Trägerfahrzeug und Transportfahrzeug parallel und einander benachbart zu liegen.

Bevorzugt ist der Aufnahmemechanismus dazu ausgebildet, das Transportfahrzeug während der Fahrt des Trägerfahrzeuges anzuheben - oder das Transportfahrzeug sich selbst anheben zu lassen - und aufzunehmen und besonders bevorzugt der Aufnahmemechanismus dazu ausgebildet ist, das Transportfahrzeug während der Fahrt des Trägerfahrzeuges und des Transportfahrzeuges mit annähernd gleicher Geschwindigkeit anzuheben und aufzunehmen. Das fahrende Transportfahrzeug dockt also an das fahrende Trägerfahrzeug an um an diesem aufgenommen zu werden.

Die Hebevorrichtung kann zumindest eine Klinke umfassen, die seitlich am Trägerfahrzeug ausgebildet ist und in der Höhe verfahrbar ist, so dass eine entsprechende Gegenklinke eines Transportfahrzeuges durch die Klinke gehoben werden kann. In einer anderen Ausbildung der Hebevorrichtung kann die Gegenklinke des Transportfahrzeuges in der Höhe verfahrbar sein und die Klinke am Trägerfahrzeug nicht verfahrbar sein, so dass sich das Transportfahrzeug selbst anhebt. Es können auch sowohl Klinke als auch Gegenklinke in der Höhe verfahrbar sein um das Transportfahrzeug anzuheben.

Bevorzugt umfasst die Hebevorrichtung zumindest zwei Klinken, die an der Seitenwand am Trägerfahrzeug in unterschiedlichen Höhen ausgebildet sind, wobei zumindest eine der Klinken in der Höhe verfahrbar ist, wobei zumindest in einer gehobenen Endposition eines Transportfahrzeuges zwei entsprechende Gegenklinken in unterschiedlichen Höhen an der Seitenwand des Transportfahrzeuges mit den beiden Klinken verbunden sind, insbesondere formschlüssig verbunden. Bevorzugt ist dabei nur eine der beiden Klinken, insbesondere die obere also vertikal höher angeordnete Klinke, verfahrbar und hebt eine der Gegenklinken eines Transportfahrzeuges, insbesondere wiederum die obere Gegenklinke, an, bis die jeweils andere Klinke und Gegenklinke in Verbindung kommen und den Hebevorgang stoppen, so dass das Transportfahrzeug an zwei Punkten am Trägerfahrzeug verspannt bzw. stabilisiert ist.

Die beiden Klinken können so ausgebildet sein, dass sie von innen nach außen oder von außen nach innen formschlüssig in die beiden Gegenklinken eines Transportfahrzeuges eingreifen bzw. diese umgreifen.

Es können auch zwei oder mehr Klinken in der Höhe verfahrbar sein, so dass zwei oder mehr entsprechende Gegenklinken in unterschiedlichen Höhen eines Transportfahrzeuges durch die Klinken gehoben werden können. Alternativ oder zusätzlich können zwei oder mehr Gegenklinken in der Höhe verfahrbar sein.

Der Aufnahmemechanismus umfasst bevorzugt zumindest einen elastischen Puffer oder eine Anschlagfläche, die seitlich am Trägerfahrzeug ausgebildet ist, so dass ein Anprall eines Transportfahrzeuges, das mit einem entsprechenden Gegenelement, wie Anschlagfläche oder elastischem Puffer, ausgebildet ist, gedämpft wird.

Bevorzugt umfasst der Aufnahmemechanismus zumindest einen elektrischen Stecker, der seitlich am Trägerfahrzeug ausgebildet ist, so dass ein entsprechender elektrischer Gegenstecker eines Transportfahrzeuges verbunden werden kann. Besonders bevorzugt kann der elektrische Stecker dazu dienen, dem Transportfahrzeug elektrischen Strom zuzuführen, insbesondere um dessen Antriebsbatterie zu laden.

Ein erfindungsgemäßes Transportfahrzeug ist selbstständig fahrfähig, also auch ohne Trägerfahrzeug als Fahrzeug verwendbar und umfasst einen Andockmechanismus, der dazu ausgebildet ist, mit einem Aufnahmemechanismus eines Trägerfahrzeuges, mit beliebigen Kombinationen der Merkmale wie oben beschrieben, zusammen zu wirken.

Bevorzugt umfasst das Transportfahrzeug zumindest eine Gegenklinke, die an der Seitenwand am Transportfahrzeug ausgebildet ist, so dass eine entsprechende Klinke eines Trägerfahrzeugs die Gegenklinke heben kann. Die Gegenklinke kann sich auch selbst an der Klinke des Trägerfahrzeuges heben. Besonders bevorzugt umfasst das Transportfahrzeug zwei Gegenklinken in unterschiedlichen Höhen an dessen Seitenwand zum Eingreifen bzw. Umgreifen zweier Klinken am Trägerfahrzeug.

Das Transportfahrzeug kann zumindest einen elastischen Puffer oder eine Anschlagfläche für einen elastischen Puffer und/oder einen elektrischen Gegenstecker umfassen, die jeweils seitlich am Transportfahrzeug ausgebildet sind.

Bevorzugt ist das Trägerfahrzeug und/oder das Transportfahrzeug als elektrisch angetriebenes Fahrzeug ausgebildet.

Bevorzugt ist das Trägerfahrzeug und/oder das Transportfahrzeug als autonom gesteuertes Fahrzeug ausgebildet.

Bevorzugt ist das Trägerfahrzeug und/oder das Transportfahrzeug als Personenbeförderungsfahrzeug ausgebildet.

Das Trägerfahrzeug kann auch als reiner Träger, also ohne unmittelbare Personenbeförderungsmöglichkeit, ausgebildet sein.

Besonders bevorzugt sind das Trägerfahrzeug und das Transportfahrzeug als elektrisch angetriebene, autonome Personenbeförderungsfahrzeuge ausgebildet.

Das Transportfahrzeug kann auch als Warentransportfahrzeug oder als "Crashbox on demand" ausgebildet sein, also als andockbare "Crashbox", die weder für den Transport von Personen noch von Waren vorgesehen ist, sondern als Schutz-Puffer für Unfälle.

Ein erfindungsgemäßer Fahrzeugverbund umfasst ein Trägerfahrzeug wie oben beschrieben und zumindest ein Transportfahrzeug wie oben beschrieben, das so ausgebildet ist, dass es am Trägerfahrzeug mittels dessen Aufnahmemechanismus aufgenommen werden kann. Insbesondere kann das Transportfahrzeug mit dessen Seitenwand parallel zu einer Seitenwand des Trägerfahrzeuges aufgenommen werden. Bevorzugt kann die Aufnahme auch während der Fahrt des Trägerfahrzeuges und des Transportfahrzeuges erfolgen.

### Kurzbeschreibung der Zeichnungen

Die Erfindung wird im Folgenden beispielhaft unter Bezugnahme auf die Zeichnungen beschrieben.
- Fig. 1: ist eine schematische seitliche Schnittansicht eines erfindungsgemäßen Trägerfahrzeuges und zweier erfindungsgemäßer Transportfahrzeuge im aufgenommenen Zustand und somit eines erfindungsgemäßen Fahrzeugverbundes.
- Fig. 2: ist eine schematische Darstellung einer alternativen Ausführungsform gemäß Fig. 1.
- Fig. 3: ist eine schematische Darstellung eines Andockverfahrens eines erfindungsgemäßen Transportfahrzeuges an ein erfindungsgemäßes Trägerfahrzeug in drei zeitlichen Schritten a) b) und c).
- Fig. 4: ist eine schematische Darstellung einer Seitenwand eines Trägerfahrzeuges mit einer Detaildarstellung von Elementen an der Seitenwand.
- Fig. 5: ist eine schematische Darstellung einer Seitenwand eines Transportfahrzeuges mit einer Detaildarstellung von Elementen an der Seitenwand.
- Fig. 6: ist eine schematische Darstellung der Elemente an den Seitenwänden des Trägerfahrzeuges (links) und des Transportfahrzeuges (rechts) in vier zeitlichen Schritten a) b) c) und d).

### Detaillierte Beschreibung der Erfindung

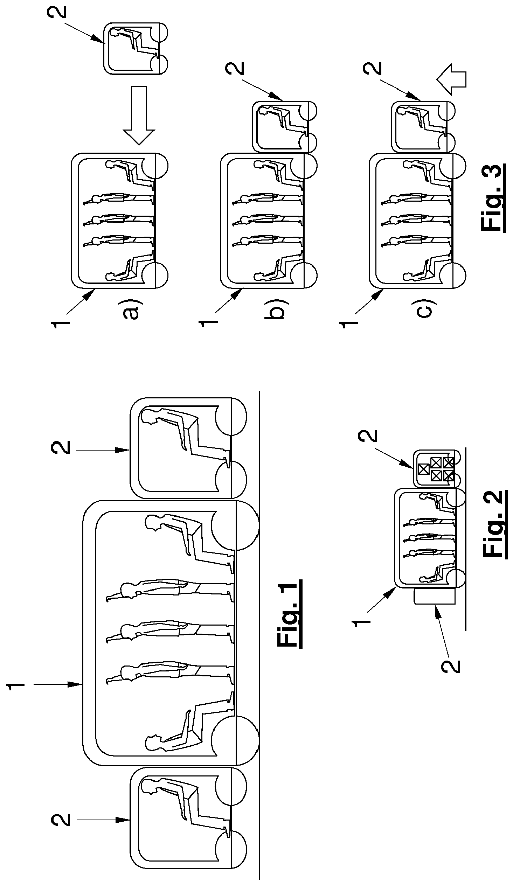

In Fig. 1 ist ein erfindungsgemäßes Trägerfahrzeug 1 dargestellt, welches ein elektrisch angetriebenes, autonomes Personenbeförderungsfahrzeuge ist mit seitlichen Aufnahmemechanismen - in Fig. 1 links und rechts am Trägerfahrzeug 1 an den jeweiligen Seitenwänden des Trägerfahrzeuges, zur Aufnahme jeweils eines, an sich selbstständig fahrfähigen, Transportfahrzeuges 2, das ebenfalls jeweils als elektrisch angetriebenes, autonomes Personenbeförderungsfahrzeuge ausgebildet ist, das allerdings jeweils kleiner ist als das Trägerfahrzeug 1.

Der Aufnahmemechanismus des Trägerfahrzeuges 1 umfasst eine Hebevorrichtung, wiederum jeweils links und rechts am Trägerfahrzeug 1. Mittels der Hebevorrichtungen sind die Transportfahrzeuge 2 an deren Seitenwänden gegenüber der Unterkante der Reifen des Trägerfahrzeuges und somit gegenüber der Ebene der Straße oder eines sonstigen Untergrundes angehoben und sind am Trägerfahrzeug 1 in angehobener Position seitlich befestigt. Derart aufgenommen am Trägerfahrzeug 1 können die Transportfahrzeuge 2 mit dem Trägerfahrzeug 1 bewegt werden, so dass sie mit dem Trägerfahrzeug 1 mitfahren. Das Anheben und die Aufnahme erfolgt dabei so, dass jeweils eine Seitenwand eines Transportfahrzeuges 2 parallel zu einer Seitenwand des Trägerfahrzeuges 1 liegt. Bevorzugt sind die Seitenwände vertikal ausgerichtet, können aber auch schräg ausgerichtet sein.

In dieser aufgenommenen Konstellation werden jedenfalls nicht mehr alle Systeme des Transportfahrzeuges 2 gebraucht, da es sich jetzt um einen Fahrzeugverband handelt. Systeme für autonomes Fahren werden zwischen den Fahrzeugen geteilt. Antriebseinheiten der kleinen Personentransporter, also Transportfahrzeuge 2, werden nicht mehr gebraucht. Dadurch können einige Systeme, wie Antriebsmotor und/oder autonome Steuerung, abgeschaltet werden um Energie zu sparen. Die kleinen Personentransporter verbrauchen fast keine Energie und können sogar vom Trägerfahrzeug 1 mit Energie versorgt werden und deren Batterie geladen werden.

Fig. 2 zeigt Varianten der Transportfahrzeuge 2, wobei als Transportfahrzeug 2 - rechts dargestellt - ein Warentransportfahrzeug bzw. - links dargestellt - eine on-demand Crashbox am Trägerfahrzeug 1 aufgenommen ist.

Die Fig. 3 zeigt ein Andockverfahren eines Transportfahrzeuges 2 am Trägerfahrzeug 1 schematisch.

Fig. 3a): Das Trägerfahrzeug 1 befindet sich im Stillstand oder ist in Bewegung und ist dazu vorbereitet, von einem Ort A zu einem anderen Ort B fahren. Ein kleineres Transportfahrzeug 2 soll ebenfalls zum Ort B fahren und nähert sich dem Trägerfahrzeug 1.

Fig. 3b): Das kleine Transportfahrzeug 2 befindet sich nun in Reichweite der Verriegelung, also eines Eingreifens von Klinken und Gegenklinken an den Seitenwänden der beiden Fahrzeuge.

Fig. 3c): Durch die Verriegelung, also den Aufnahmemechanismus und Andockmechanismus sowie durch die Hebevorrichtung, wird das Transportfahrzeug 2 mit dem Trägerfahrzeug 1 verbunden und angehoben und so von diesem seitlich außen aufgenommen.

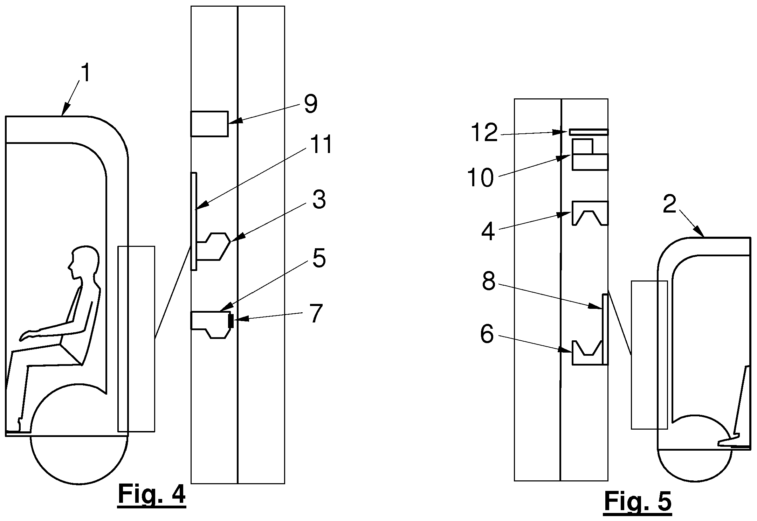

Fig. 4 zeigt eine schematische Darstellung eines Aufnahmemechanismus inklusive Hebevorrichtung an einer Seitenwand des Trägerfahrzeuges 1 in einer möglichen Ausführungsform. Die Seitenwand des Trägerfahrzeuges 1 umfasst eine obere Klinke 3, die eine Ausformung nach oben hin aufweist und auf einer Führungsschiene 11 vertikal verfahren werden kann um eine Hubbewegung auszuführen. Die Seitenwand umfasst ferner eine untere Klinke 5, die eine Ausformung nach unten hin aufweist und an deren Stirnseite ein elastischer Puffer 7, insbesondere Gummipuffer, ausgebildet ist. Die Klinken 3 und 5 sowie die Führungsschiene 11 bilden zusammen die Hebevorrichtung des Trägerfahrzeuges 1.

Die Aufnahmevorrichtung an der Seitenwand des Trägerfahrzeuges 1 umfasst ferner einen elektrischen Stecker 9.

In Fig. 4 sind die jeweiligen Gegenelemente des Aufnahmemechanismus inklusive der Hebevorrichtung an einer Seitenwand eines Transportfahrzeuges 2 dargestellt. Die jeweiligen Gegenelemente sind jeweils in vergleichbarer Höhe wie die Elemente am Trägerfahrzeug ausgebildet.

Die Gegenelemente an der Seitenwand des Transportfahrzeuges 2 umfassen: eine obere Gegenklinke 4 mit einer Ausbauchung unten, zur Aufnahme der Ausformung der Klinke 3, eine untere Gegenklinke 6 mit einer Ausbauchung oben, zur Aufnahme der Ausformung der Klinke 5. Die Klinke 5, sowie die Gegenklinken 4 und 6 können an den jeweiligen Seitenwänden in einer fixen Höhe montiert sein, so dass lediglich die Klinke 3 vertikal verfahrbar ist. Ferner umfasst die Seitenwand des Transportfahrzeuges 2 eine Anschlagfläche 8 und einen elektrischen Gegenstecker 10 mit einem Abdeckelement 12, insbesondere Abdeckklappe. Das Abdeckelement 12 kann bei Verbindung des elektrischen Steckers 9 mit dem elektrischen Gegenstecker 10 automatisch angehoben werden.

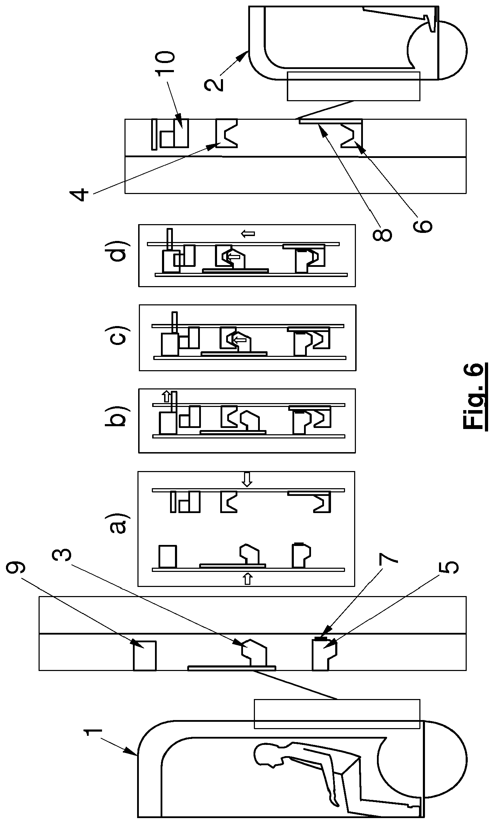

Figur 6 zeigt schließlich in den mittleren Abbildungen a) bis d) den zeitlichen Ablauf des Verriegelungsvorganges, also des Ausnahme- und Hebemechanismus.
a) Die Fahrzeuge Trägerfahrzeug 1 (links dargestellt) und Transportfahrzeug 2 (rechts dargestellt) und somit die Seitenwände der beiden Fahrzeuge bewegen sich auf einander zu.
b) Die Fahrzeuge befinden sich von ihrem horizontalen Abstand her in der Verriegelungsposition. Ein Anschlag, nämlich der elastische Puffer 7, berührt die Anschlagfläche 8 bzw. Anschlagplatte 8. Zusätzlich kann ein Abdeckelement 12 des elektrischen Steckers 10, mechanisch oder elektrisch, den Stecker 10 frei geben.
c) Die obere Klinke 3 des Trägerfahrzeuges 1 fährt nach oben und erreicht die obere Klinke 4 des kleinen Personentransporters 2.
d) Die obere Klinke 3 des Trägerfahrzeuges 1 fährt weiter nach oben, hebt automatisch den kleinen Personentransporter 2 an, bis zur Endposition wo sich das System (inkl. unterer Klinken 5, 6) verspannt hat, die zwei Fahrzeuge fest miteinander verbunden sind und die elektrischen Stecker 9, 10 eine Verbindung zwischen den Fahrzeugen hergestellt haben.

### Bezugszeichenliste

- 1: Trägerfahrzeug
- 2: Transportfahrzeug
- 3: Klinke
- 4: Gegenklinke
- 5: (zweite) Klinke
- 6: (zweite) Gegenklinke
- 7: elastischer Puffer
- 8: Anschlagfläche
- 9: elektrischer Stecker
- 10: elektrischer Gegenstecker
- 11: Führungsschiene
- 12: Abdeckelement

## Patentansprüche

1. Trägerfahrzeug (1), umfassend mindestens einen Aufnahmemechanismus zur Aufnahme mindestens eines an sich selbstständig fahrfähigen Transportfahrzeuges (2), so dass ein mittels Aufnahmemechanismus aufgenommenes Transportfahrzeug (2) ohne selbstständige Fahrleistung mit dem Trägerfahrzeug (1) mitfahren kann,
**dadurch gekennzeichnet, dass** der Aufnahmemechanismus eine Hebevorrichtung (3, 5, 11) an einer Seitenwand am Trägerfahrzeug (1) umfasst und der Aufnahmemechanismus dazu ausgebildet ist, das Transportfahrzeug (2) an einer Seitenwand des Transportfahrzeuges (2) mittels Hebevorrichtung (3, 5, 11) anzuheben oder sich anheben zu lassen und das Transportfahrzeug (2) außen am Trägerfahrzeug (1) zum Mitfahren aufzunehmen.

2. Trägerfahrzeug (1) nach Anspruch 1,
**dadurch gekennzeichnet, dass** der Aufnahmemechanismus dazu ausgebildet ist, das Transportfahrzeug (2) während der Fahrt des Trägerfahrzeuges (1) anzuheben, oder sich anheben zu lassen, und aufzunehmen und bevorzugt der Aufnahmemechanismus dazu ausgebildet ist, das Transportfahrzeug (2) während der Fahrt des Trägerfahrzeuges (1) und des Transportfahrzeuges (2) mit annähernd gleicher Geschwindigkeit anzuheben und aufzunehmen.

3. Trägerfahrzeug (1) nach zumindest einem der vorhergehenden Ansprüche,
**dadurch gekennzeichnet, dass** die Hebevorrichtung (3, 5, 11) zumindest eine Klinke (3) umfasst, die an der Seitenwand des Trägerfahrzeugs (1) ausgebildet ist und in der Höhe verfahrbar ist, so dass eine entsprechende Gegenklinke (4) an der Seitenwand eines Transportfahrzeuges (2) durch die Klinke (3) gehoben werden kann.

4. Trägerfahrzeug (1) nach zumindest einem der vorhergehenden Ansprüche,
**dadurch gekennzeichnet, dass** die Hebevorrichtung (3, 5, 11) zumindest zwei Klinken (3, 5) umfasst, die an der Seitenwand des Trägerfahrzeugs (1) in unterschiedlichen Höhen ausgebildet sind, wobei zumindest eine der Klinken (3) in der Höhe verfahrbar ist, wobei zumindest in einer gehobenen Endposition eines Transportfahrzeuges (2) zwei entsprechende Gegenklinken (4, 6) in unterschiedlichen Höhen an der Seitenwand des Transportfahrzeuges (2) mit den beiden Klinken (3, 5) verbunden sind, insbesondere formschlüssig verbunden.

5. Trägerfahrzeug (1) nach zumindest einem der vorhergehenden Ansprüche,
**dadurch gekennzeichnet, dass** der Aufnahmemechanismus zumindest einen elastischen Puffer (7) oder eine Anschlagfläche umfasst, die an der Seitenwand am Trägerfahrzeug (1) ausgebildet ist, so dass ein Anprall eines Transportfahrzeuges (2), das an dessen Seitenwand mit einem entsprechenden Gegenelement, wie Anschlagfläche (8) oder elastischem Puffer, ausgebildet ist, gedämpft wird.

6. Trägerfahrzeug (1) nach zumindest einem der vorhergehenden Ansprüche,
**dadurch gekennzeichnet, dass** der Aufnahmemechanismus zumindest einen elektrischen Stecker (9) umfasst, der an der Seitenwand des Trägerfahrzeugs (1) ausgebildet ist, so dass ein entsprechender elektrischer Gegenstecker (10) eines Transportfahrzeuges (2) verbunden werden kann.

7. Trägerfahrzeug (1) nach zumindest einem der Ansprüche 1 bis 6, wobei das Trägerfahrzeug (1) als elektrisch angetriebenes Fahrzeug ausgebildet ist und/oder als autonom gesteuertes Fahrzeug ausgebildet ist.

8. Transportfahrzeug (2), wobei das Transportfahrzeug (2) selbstständig fahrfähig ist, wobei das Transportfahrzeug (2) einen Andockmechanismus an zumindest einer Seitenwand umfasst, wobei der Andockmechanismus zumindest eine Gegenklinke (4) umfasst, die an der Seitenwand des Transportfahrzeugs (2) ausgebildet ist, wobei der Andockmechanismus dazu ausgebildet ist, mit einem Aufnahmemechanismus eines Trägerfahrzeuges (1) nach zumindest einem der vorhergehenden Ansprüche zusammen zu wirken, so dass eine entsprechende Klinke (3) eines Trägerfahrzeugs (1) die Gegenklinke (4) heben kann oder sich selbst heben lassen kann, und das Transportfahrzeug (2) hierdurch zum Mitfahren außen am Trägerfahrzeug (1) aufgenommen werden kann.

9. Transportfahrzeug (2) nach Anspruch 8,
**dadurch gekennzeichnet, dass** der Andockmechanismus des Transportfahrzeugs (2) zumindest zwei Gegenklinken (4, 6) in unterschiedlichen Höhen umfasst.

10. Transportfahrzeug (2) nach einem der Ansprüche 8 oder 9,
**dadurch gekennzeichnet, dass** das Transportfahrzeug (2) zumindest einen elastischen Puffer oder eine Anschlagfläche (8) für einen elastischen Puffer und/oder einen elektrischen Gegenstecker (10) umfasst, die jeweils an der Seitenwand am Transportfahrzeug (2) ausgebildet sind.

11. Transportfahrzeug (2) nach zumindest einem der Ansprüche 8 bis 10, wobei das Transportfahrzeug (2) als elektrisch angetriebenes Fahrzeug ausgebildet ist und/oder als autonom gesteuertes Fahrzeug ausgebildet ist.

12. Fahrzeugverbund umfassend ein Trägerfahrzeug (1) nach zumindest einem der Ansprüche 1 bis 7 und zumindest ein Transportfahrzeug (2) nach zumindest einem der Ansprüche 8 bis 11, das so ausgebildet ist, dass es am Trägerfahrzeug (1) mittels dessen Aufnahmemechanismus aufgenommen werden kann.
